# EUROPÄISCHE PATENTANMELDUNG

(11) **EP 1 936 235 A1**
(43) Veröffentlichungstag der Anmeldung: **25.06.2008**
(21) Anmeldenummer: 07123141.9
(22) Anmeldetag: 13.12.2007
(51) Int. Cl.: F16H 9/26, F16H 37/08, F16D 41/12

(54) **Stufenlose Übersetzungseinrichtung**

(30) Priorität: 22.12.2006 AT 21392006
(71) Anmelder: STOLLBERGER, JOSEF, 8101 Gratkorn (AT)
(72) Erfinder: Stollberger, Josef, 8101 Gratkorn (AT); Stuhlbacher, Franz, 8045 Graz (AT)
(74) Vertreter: Babeluk, Michael

(57) **Zusammenfassung**

Die Erfindung betrifft eine stufenlose Übersetzungseinrichtung (1) mit zumindest einem Hauptzugmittelgetriebe (2), insbesondere einem Riemengetriebe, das ein erstes und ein zweites Rad (3, 4) aufweist, welche Räder (3, 4) auf einem umlaufenden Planetenträger (13) drehbar gelagert sind, so dass die Drehachsen (3a, 4a) des ersten und zweiten Rades (3, 4) zumindest annähernd entlang einer Kreisbahn um eine ortsfeste Achse (14) bewegbar sind, und wobei der Planetenträger (13) mit einer Stegwelle (16) drehverbunden ist, und wobei das erste Rad (3) mit einer durch eine Antriebs- oder Abtriebswelle gebildeten ersten Welle (6) drehverbunden ist und das zweite Rad (4) mit einer durch eine Abtriebs- bzw. Antriebswelle gebildeten zweiten Welle (12) drehverbunden ist. Um die Systemsicherheit und den Wirkungsgrad zu erhöhen, ist vorgesehen, dass die Stegwelle (16) über zumindest eine Freilaufkupplung (20, 22) mit der ersten Welle (6) verbunden ist.

## Beschreibung

Die Erfindung betrifft eine stufenlose Übersetzungseinrichtung mit zumindest einem Hauptzugmittelgetriebe, insbesondere einem Riemengetriebe, das ein erstes und ein zweites Rad aufweist, welche Räder auf einem umlaufenden Planetenträger drehbar gelagert sind, so dass die Achsen des ersten und zweiten Rades zumindest annähernd entlang einer Kreisbahn um eine ortsfeste Achse bewegbar sind, und wobei der Planetenträger mit einer Stegwelle drehverbunden ist, und wobei eines der beiden Räder mit einer durch eine Antriebs- oder Abtriebswelle gebildeten ersten Welle drehverbunden ist und das zweite Rad mit einer durch eine Abtriebs- bzw. Antriebswelle gebildeten zweiten Welle drehverbunden ist.

Die AT 003.400 U1 beschreibt eine stufenlose Übersetzungseinrichtung mit einem umlaufenden Riemengetriebe, wobei ein Rad des Riemengetriebes mit einer Antriebswelle und das andere Rad des Riemengetriebes mit einer Abtriebswelle verbunden ist. Bei hohen Übersetzungsverhältnissen und hohen Drehzahlen können dabei derart hohe Umlaufgeschwindigkeiten der Räder des umlaufenden Zugmittelgetriebes auftreten, so dass die Integrität des Systems gefährdet ist. Weiters wird das Zugmittel des umlaufenden Zumittelgetriebes stark belastet, was die Standzeit des Zugmittels herabsetzt.

Aufgabe der Erfindung ist es, diese Nachteile zu vermeiden und die Systemsicherheit sowie den Wirkungsgrad bei einer stufenlosen Übersetzungseinrichtung zu verbessern.

Erfindungsgemäß wird dies dadurch erreicht, dass die Stegwelle über zumindest eine Freilaufkupplung mit der ersten Welle verbunden ist, wobei die Freilaufkupplung bei Drehmomentübertragung von der Stegwelle auf die erste Welle eingekuppelt ist. Vorzugsweise ist dabei vorgesehen, dass die Stegwelle über eine erste Freilaufkupplung und über eine zweite Freilaufkupplung mit der ersten Welle verbunden ist.

Besonders vorteilhaft ist es, wenn die Stegwelle über einen ersten Nebenantriebsstrang mit der ersten Welle verbunden ist, wobei die erste Freilaufkupplung im ersten Nebenantriebsstrang zwischen der Stegwelle und der ersten Welle angeordnet ist. Dadurch kann sich die in einer ersten Richtung umlaufende Stegwelle an der ersten Welle abstützen, sobald die Drehzahl der Stegwelle eine zulässige maximale Drehzahl überschreitet. Die zulässige maximale Drehzahl der Stegwelle wird durch das Übersetzungsverhältnis im ersten Nebenantriebsstrang zwischen der Stegwelle und der ersten Welle definiert.

Um auch in einer der ersten Richtung entgegengesetzten zweiten Drehrichtung der Stegwelle ein Abstützen an der ersten Welle zur Vermeidung von Überdrehzahlen zu ermöglichen, kann weiters vorgesehen sein, dass die Stegwelle über einen eine Umkehrstufe aufweisenden zweiten Nebenantriebsstrang mit der ersten Welle verbunden ist, wobei die zweite Freilaufkupplung im zweiten Nebenantriebsstrang zwischen der Stegwelle und der ersten Welle angeordnet ist.

Zwischen der ersten Welle und der Stegwelle können in den Nebenantriebssträngen Zugmittelgetriebe und/oder Zahnradgetriebe angeordnet sein. Besonders vorteilhaft ist es dabei, wenn im ersten Nebenantriebsstrang ein Kettengetriebe und im zweiten Nebenantriebsstrang ein Zahnradgetriebe angeordnet ist. Das beispielsweise aus zwei Stirnrädern bestehende Zahnradgetriebe kann dabei in einfacher Weise die Umkehrstufe zur Drehrichtungsumkehr ausbilden.

Die Stegwelle ist somit in beiden Drehrichtungen über die Freiläufe auf der ersten Welle abgestützt. Dadurch wird die Umlaufgeschwindigkeit des Planetenträgers begrenzt. Da sich der Planetenträger über die Freiläufe in der einen oder anderen Richtung auf der Antriebswelle abstützen kann, kann weiters der Energiedurchsatz erhöht werden, ohne dass das Zugmittel zusätzlich belastet wird, da ein Teil der übertragenen Energie über den Planetenträger zur zweiten Welle geführt wird.

In bestimmten Betriebssituationen, beispielsweise im Schubbetrieb mit Motorbremsfunktion, kann es vorteilhaft sein, wenn zumindest eine Freilaufkupplung über eine schaltbare Sperreinrichtung überbrückbar ist, so dass wahlweise eine Drehmomentübertragung von der ersten Welle auf die Stegwelle möglich ist.

Die Erfindung wird im Folgenden anhand der Figur näher erläutert. Es zeigen:
- Fig. 1: eine erfindungsgemäße stufenlose Übersetzungseinrichtung in einem Längsschnitt;
- Fig. 2: die Übersetzungseinrichtung in einem Schnitt gemäß der Linie II - II in Fig. 1; und
- Fig. 3: die Übersetzungseinrichtung in einem Schnitt gemäß der Linie III - III in Fig. 1.

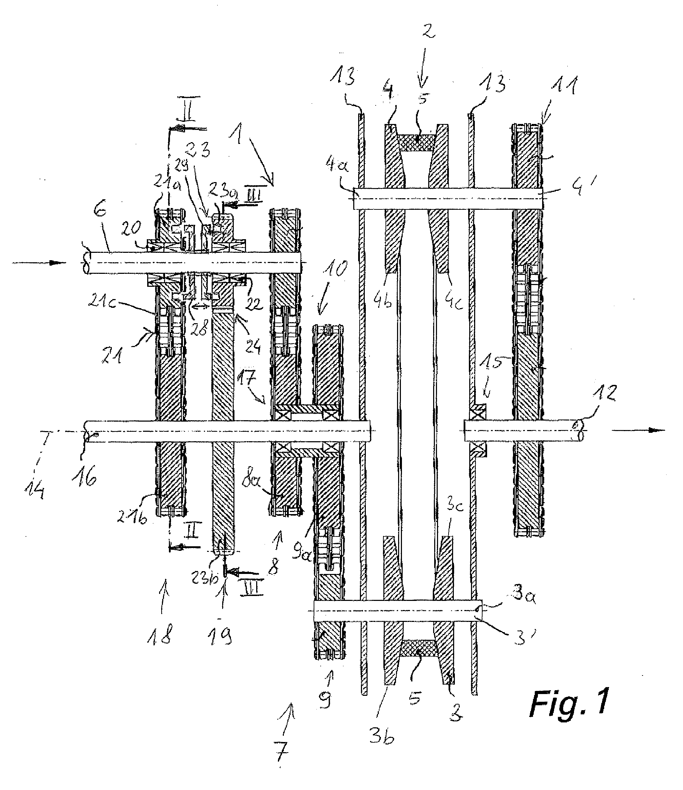

Die Fig. 1 zeigt eine stufenlose Übersetzungseinrichtung 1 mit einem ebenen, als Riemengetriebe ausgebildeten Hauptzugmittelgetriebe 2 mit einem ersten Rad 3 und einem zweiten Rad 4. Die Drehachsen 3a und 4a der beiden Räder 3, 4 sind parallel zueinander angeordnet. Das erste Rad 3 und das zweite Rad 4 sind miteinander über ein als Riemen ausgebildetes Zugmittel 5 miteinander verbunden, wobei das endlose Zugmittel 5 beide Räder 3, 4 umschlingt. Die Radscheiben 3b, 3c bzw. 4b, 4c des ersten Rades 3 bzw. zweiten Rades 4 sind durch eine nicht weiter dargestellte Verstelleinrichtung zueinander axial verschiebbar, wodurch der Umschlingungsradius des Zugmittels 5 am ersten Rad 3 bzw. zweiten Rad 4 verändert werden kann. Somit kann das Übersetzungsverhältnis zwischen dem ersten Rad 3 und dem zweiten Rad 4 bei gleichbleibendem Abstand zwischen den Drehachsen 3a, 4a verändert werden.

Das erste Rad 3 ist über die erste Radwelle 3' mit einer ersten Welle 6 verbunden, wobei im Hauptantriebsstrang 7 zwischen der ersten Welle 6 und der Radwelle 3' des ersten Rades 3 ein im Ausführungsbeispiel durch zwei Kettentriebe 8, 9 gebildetes erstes Übertragungsmittel 10 angeordnet sind. Die erste Welle 6 bildet im Ausführungsführungsbeispiel die Antriebswelle aus.

Das zweite Rad 4 ist über ein zweites Übertragungsmittel 11, welches im Ausführungsbeispiel ebenfalls als Kettentrieb ausgebildet ist, mit einer zweiten Welle 12 verbunden, welche im vorliegenden Fall die Abtriebswelle ausbildet.

Die Radwellen 3', 4' sind auf einem Planetenträger 13 drehbar gelagert, wobei der Planetenträger 13 selbst um eine ortsfeste Achse 14 drehbar gelagert ist. Über das Lager 15 ist der Planetenträger gegenüber der zweiten Welle 12 abgestützt. Die ortsfeste Achse 12 ist im Ausführungsbeispiel achsgleich mit der zweiten Welle 12 angeordnet. Der Planetenträger 13 ist fest mit einer drehbar gelagerten Stegwelle 16 verbunden. Im Ausführungsbeispiel sind die Zwischenräder 8a, 9a der Kettentriebe 8, 9 über ein Lager 17 an der Stegwelle 16 abgestützt.

Die Veränderung des Übersetzungsverhältnisses zwischen der ersten Welle 6 und der zweiten Welle 12 erfolgt hauptsächlich durch Veränderung der Umschlingungsradien des Zugmittels 5 am ersten bzw. zweiten Rad 3, 4, wobei die Umschlingungsradien am ersten Rad 3 und am zweiten Rad 4 entgegengesetzt zueinander versetzt werden. Wird die erste Welle 6 und somit das erste Rad 3 angetrieben, so wird das Drehmoment entsprechend dem Übersetzungsverhältnis zwischen dem ersten und dem zweiten Rad 3, 4 auf die zweite Welle 12 übertragen. Je nachdem, ob ein positives oder negatives Übersetzungsverhältnis zwischen den beiden Rädern 3, 4 eingestellt wird, dreht der Planetenträger 13 in gleicher Richtung 25 wie die erste Welle 6 oder entgegengesetzt dazu.

Die Stegwelle 16 ist über einen ersten und einen zweiten Nebenantriebsstrang 18, 19 mit der ersten Welle 6 verbunden, wobei im ersten Nebenantriebsstrang 18 eine erste Freilaufkupplung 20 und ein Zugmittelgetriebe 21, und im zweiten Nebenantriebsstrang 19 eine zweite Freilaufkupplung 22 und ein Zahnradgetriebe 23 angeordnet ist. Das Zahnradgetriebe 23 bildet eine Umkehrstufe 24 mit den beiden durch kämmende Zahnräder gebildeten Zwischenrädern 23a, 23b aus. Das Zugmittelgetriebe 21 weist zwei Zwischenräder 21a, 21b auf, die über ein durch eine Kette gebildetes Zugmittel 21c miteinander verbunden sind. Im Ausführungsbeispiel sind die Freilaufkupplungen 20, 22 auf Zwischenrädern 21a und 23a des Zugmittelgetriebes 21 bzw. des Zahnradgetriebes 23 im Bereich der ersten Welle 6 angeordnet. Die Zwischenräder 21b und 23b sind in diesem Falle starr mit der Stegwelle 16 verbunden. Es ist aber auch eine Anordnung der Freilaufkupplungen 20, 22 auf den Zwischenrädern 21b bzw. 23b des Zugmittelgetriebes 21 bzw. des Zahnradgetriebes 23 im Bereich der Stegachse 16 möglich.

Die Anordnung der Freilaufkupplungen 20, 22 ist derart, dass im Normalfall ein Drehmoment zwischen der Stegwelle 16 und der ersten Welle 6, aber nicht zwischen der ersten Welle 6 und der Stegwelle 16 übertragen werden kann. Ist die Drehzahl der Stegwelle 16 null oder wesentlich geringer als die Drehzahl der ersten Welle 6, so befinden sich die Freilaufkupplungen 20, 22 in ihrer Freilaufstellung, wodurch die erste Welle 6 von der Stegwelle 16 entkoppelt ist. Erst bei Überschreiten einer definierten maximalen Drehzahl der Stegwelle 16 wird eine der beiden Freilaufkupplungen eingekuppelt und somit eine Drehmomentübertragung zwischen Stegwelle 16 und erster Welle 6 ermöglicht. Das Einkuppeln geschieht, wenn ein Drehzahlabgleich zwischen der ersten Welle 6 und dem durch die Stegwelle 16 angetriebenem Zwischenrad 21a bzw. 23a erfolgt.

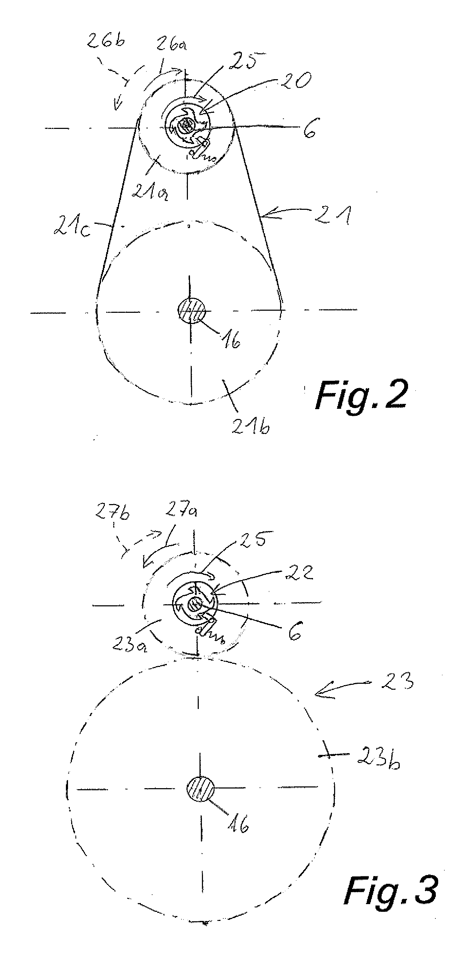

Beide Freiläufe 20, 22 sind so angeordnet, dass die von den Stegen 13 wirkenden Kräfte auf der ersten Welle 6 abgestützt werden. Dreht der Planetenträger 13 in die gleiche Richtung 26a, wie die erste Welle 6, deren Drehrichtung mit Bezugszeichen 25 bezeichnet ist, so wird das Drehmoment der Stegwelle 16 über die erste Freilaufkupplung 20 auf der ersten Welle 6 abgestützt, sobald ein Drehzahlabgleich zwischen der ersten Welle und dem Zwischenrad 21a erfolgt, da sich die Freilaufkupplung in der Sperrstellung befindet (Fig. 2). Durch die Umkehrstufe 24 wird zu diesem Betriebspunkt das Zwischenrad 23a des Zahnradgetriebes 23 in entgegengesetzter Richtung 27a, also in Freilaufrichtung der Freilaufkupplung 22, gedreht (Fig. 3).

Dreht der Planetenträger 13 in die entgegengesetzte Richtung, so werden auch die Zwischenräder 21a und 23a in den entgegengesetzten Drehrichtungen 26b, 27b gedreht, wie in Fig. 3 mit gestrichelten Linien angedeutet ist. Dadurch wird das Zwischenrad 21a nun in Freilaufrichtung der ersten Freilaufkupplung 20 und das Zwischenrad 23a entgegen der Freilaufrichtung der zweiten Freilaufkupplung 22 bewegt. Dies bewirkt, dass bei Überschreiten einer definierten maximalen Drehzahl der Stegwelle 16 sich diese über die zweite Freilaufkupplung 22 auf der ersten Welle 6 abstützen kann.

Die zulässige maximale Drehzahl der Stegwelle 16 wird durch die Übersetzungsverhältnisse im ersten und im zweiten Nebenantriebsstrang 18, 19 definiert.

Ist die Riemenübersetzung von Antrieb zu Abtrieb hoch, wird der Planetenträger 13 gegen die Drehrichtung 25 der ersten Welle 6 umlaufen und ermöglicht dadurch eine unendliche Gesamtübersetzung des Systems. Dabei verhindert die erste Freilaufkupplung 20, dass der Planetenträger 13 zu schnell rotiert. Verändert man die Riemenübersetzung des Hauptzugmittelgetriebes 2, so beginnt - je nach Auslegung - der Planetenträger 13 bei einer bestimmten Riemenübersetzung in die gleiche Richtung 25 wie die erste Welle 6 zu drehen. Die zweite Freilaufkupplung 22 verhindert auch in diesem Fall, dass der Planetenträger 13 zu schnell in dieser Richtung rotiert. Dabei verringert sich je nach Höhe der Drehzahl des Planetenträgers 13 die relative Riemengeschwindigkeit unabhängig von der Gesamtübersetzung.

In bestimmten Betriebssituationen, beispielsweise im Schubbetrieb mit Motorbremsfunktion, kann es vorteilhaft sein, wenn zumindest eine Freilaufkupplung 20, 22 über eine schematisch in Fig. 1 dargestellte schaltbare Sperreinrichtung 28, 29, beispielsweise eine axial auf der ersten Welle 6 verschiebbare Klauenkupplung, überbrückbar ist, so dass wahlweise eine Drehmomentübertragung von der ersten Welle 6 auf die Stegwelle 16 möglich ist.

Durch die Anhebung der Antriebsdrehzahl kann somit der Gesamtenergiedurchsatz erhöht werden, ohne den Riemen 5 zu überlasten, da ein Teil der Energie über den Planetenträger 13 fließt. Dadurch, dass sich der Planetenträger 13 in die eine oder andere Drehrichtung über die Freilaufkupplungen 20, 22 auf der ersten Welle 6 abstützen kann, wird auch die Möglichkeit geschaffen, den Energiedurchsatz zu erhöhen, ohne dass der Riemen 5 zusätzlich belastet wird, da ein Teil der Energie über den Planetenträger 13 zur zweiten Welle 12 geführt wird.

## Patentansprüche

1. Stufenlose Übersetzungseinrichtung (1) mit zumindest einem Hauptzugmittelgetriebe (2), insbesondere einem Riemengetriebe, das ein erstes und ein zweites Rad (3, 4) aufweist, welche Räder (3, 4) auf einem umlaufenden Planetenträger (13) drehbar gelagert sind, so dass die Drehachsen (3a, 4a) des ersten und zweiten Rades (3, 4) zumindest annähernd entlang einer Kreisbahn um eine ortsfeste Achse (14) bewegbar sind, und wobei der Planetenträger (13) mit einer Stegwelle (16) drehverbunden ist, und wobei das erste Rad (3) mit einer durch eine Antriebs- oder Abtriebswelle gebildeten ersten Welle (6) drehverbunden ist und das zweite Rad (4) mit einer durch eine Abtriebs- bzw. Antriebswelle gebildeten zweiten Welle (12) drehverbunden ist, **dadurch gekennzeichnet, dass** die Stegwelle (16) über zumindest eine Freilaufkupplung (20, 22) mit der ersten Welle (6) verbunden ist, wobei die Freilaufkupplung (20, 22) bei Drehmomentübertragung von der Stegwelle (16) auf die erste Welle (6) eingekuppelt ist.

2. Übersetzungseinrichtung (1) nach Anspruch 1, **dadurch gekennzeichnet, dass** die Stegwelle (16) über eine erste Freilaufkupplung (20) und über eine zweite Freilaufkupplung (22) mit der ersten Welle (6) verbunden ist.

3. Übersetzungseinrichtung (1) nach Anspruch 1 oder 2, **dadurch gekennzeichnet, dass** die Stegwelle (16) über einen ersten Nebenantriebsstrang (18) mit der ersten Welle (6) verbunden ist, wobei die erste Freilaufkupplung (20) im ersten Nebenantriebsstrang (18) zwischen der Stegwelle (16) und der ersten Welle (6) angeordnet ist.

4. Übersetzungseinrichtung (1) nach einem der Ansprüche 1 bis 3, **dadurch gekennzeichnet, dass** die Stegwelle (16) über einen eine Umkehrstufe (1, 24) aufweisenden zweiten Nebenantriebsstrang (19) mit der ersten Welle (6) verbunden ist, wobei die zweite Freilaufkupplung (22) im zweiten Nebenantriebsstrang (19) zwischen der Stegwelle (16) und der ersten Welle (6) angeordnet ist.

5. Übersetzungseinrichtung (1) nach einem der Ansprüche 1 bis 4, **dadurch gekennzeichnet, dass** zumindest eine Freilaufkupplung (20, 22) über eine schaltbare Sperreinrichtung (28, 29) überbrückbar ist, so dass wahlweise eine Drehmomentübertragung von der ersten Welle (6) auf die Stegwelle (16) möglich ist.

6. Übersetzungseinrichtung (1) nach einem der Ansprüche 2 bis 4, **dadurch gekennzeichnet, dass** im ersten und/oder zweiten Nebenantriebsstrang (18, 19) zwischen der Stegwelle (16) und der ersten Welle (6) ein Zugmittelgetriebe (21), vorzugsweise ein Kettengetriebe, angeordnet ist.

7. Übersetzungseinrichtung (1) nach einem der Ansprüche 2 bis 5, **dadurch gekennzeichnet, dass** im ersten und/oder zweiten Nebenantriebsstrang (18, 19) zwischen der Stegwelle (16) und der ersten Welle (6) ein Zahnradgetriebe (23), vorzugsweise ein Stirnradgetriebe, angeordnet ist.
